# FASCICULE DE BREVET EUROPEEN

(11) **EP 2 460 720 B1**
(45) Date de publication et mention de la délivrance du brevet: **30.03.2016**
(21) Numéro de dépôt: 11009080.0
(22) Date de dépôt: 16.11.2011
(51) Int. Cl.: B64C 21/10, B64C 7/00, B64C 27/82, B64C 23/06, B64C 1/00

(54) **Elément de structure d'un giravion pour diminuer la traînée aérodynamique**
Strukturelement eines Drehflügelflugzeugs zur Verringerung des aerodynamischen Widerstands
Structural element of a rotorcraft for reducing aerodynamic drag

(30) Priorité: 06.12.2010 FR 1004748
(43) Date de publication de la demande: 06.06.2012
(73) Titulaire: Airbus Helicopters, 13725 Marignane Cedex (FR)
(72) Inventeur: Alfano, David, 13090 Aix en Provence (FR)
(74) Mandataire: GPI & Associés

(56) Documents cités:
- EP-A2- 1 527 992
- GB-A- 577 524
- JP-A- 2000 255 496
- US-A1- 2008 217 484
- US-B1- 6 345 791

## Description

La présente demande revendique la priorité de la demande FR N°1004748 déposée le 6 décembre 2010.

L'invention se rapporte au domaine technique général de l'aéronautique et plus précisément à la construction d'éléments structurels d'aéronefs, en particulier d'aéronefs à voilure tournante tels que les giravions. Ces éléments structurels, qu'il convient de différentier de surfaces portantes, sont souvent à l'origine de traînées aérodynamiques.

Lors de la conception d'aéronefs et notamment de giravions, en particulier d'hélicoptères, il est constant de vouloir réduire au mieux la traînée aérodynamique des différents éléments structurels constituant l'aéronef.

La présente invention concerne plus particulièrement un rotor arrière caréné, dit Fenestron®, d'un hélicoptère, ou plus généralement un élément de structure d'une certaine épaisseur, dont la forme génère une traînée aérodynamique.

A titre d'exemple, certains rotors arrières carénés de type Fenestron® comportent une partie arrière se terminant par un culot franc, par exemple une pièce s'étendant sensiblement orthogonalement à la direction d'avancement et refermant la partie arrière du carénage du Fenestron. Le carénage d'un tel rotor arrière présente donc subitement en aval du culot franc, une largeur nulle. Une telle forme présente un sillage important et est responsable d'une part non négligeable de sa traînée aérodynamique. Une telle forme pénalise donc les performances aérodynamiques de l'appareil en vol d'avancement.

L'écoulement de l'air, en aval du culot franc est massivement décollé de la structure et ce décollement aérodynamique, c'est-à-dire une zone de concentration de tourbillons et de turbulences relativement étendue, est à l'origine d'une importante dissipation d'énergie ainsi que de vibrations induites par les efforts aérodynamiques.

Afin de remédier à ces inconvénients, il a été imaginé de remplacer le culot franc par une partie de carénage se terminant par une forme profilée. Un tel changement de forme ne s'avère efficace vis-à-vis de la traînée que si l'épaisseur relative du carénage est inférieure à 15%.

L'épaisseur relative est la valeur du rapport entre l'épaisseur maximale de l'objet dans la direction transversale à l'écoulement, sur la longueur de l'objet (dimension qu'occupe l'objet dans la direction longitudinale à l'écoulement).

Une telle épaisseur relative engendre un besoin de longueur (corde du carénage) importante, compte tenu de la largeur de carénage nécessaire pour y loger le rotor anti-couple. L'utilisation d'une telle partie profilée augmente donc la masse de l'appareil. Cette augmentation de masse est en outre localisée très loin en arrière du centre de gravité de l'appareil, générant ainsi des problèmes de centrage de l'appareil. Par ailleurs, une telle partie profilée génère des problèmes de qualité de vol, notamment une instabilité de route de l'appareil. Une telle instabilité de route peut ainsi résulter d'une traînée réduite en vol mais qui présente une position de décollement instable. Le battement du sillage, n'étant pas localisé au même endroit, introduit alors des oscillations naturelles auto-entretenues sur les efforts créés par la carène, notamment en lacet. Le pilote peut alors ressentir en provenance de la queue de l'hélicoptère, des oscillations en lacet autour de la direction (route) qu'il a fixée.

Une telle partie profilée peut également générer une dissymétrie en vol latéral de l'appareil. En effet, plus on augmente la surface latérale de la carène, plus on s'opposera au mouvement en vol latéral. A titre d'exemple, le fait de rallonger l'arrière d'un fenestron va offrir une surface plus importante au vent en vol latéral.

On connaît également, par exemple par l'intermédiaire du document EP0724691, une pale de rotor d'un giravion, comportant des reliefs aérodynamiques améliorant les caractéristiques aérodynamiques de ladite pale, en vue de favoriser l'écoulement du fluide environnant. Les reliefs sont formés notamment de vagues ménagées dans le plan général de la pale, en rehausse ou en creusement. Ces vagues réalisent des variations d'épaisseur de la pale, réparties le long de son envergure en extrados et également en intrados. Ces reliefs sont également formés par la variation de courbe de la pale suivant sa profondeur, lesdits reliefs étant agencés en dents de scie réparties le long de l'envergure de ladite pale au moins à son bord d'attaque, voire aussi à son bord de fuite. Ce document concerne donc très spécifiquement des surfaces portantes d'un giravion.

On connaît par ailleurs le document «Near-Wake Flow Dynamics from Trailing Edge Spanwise Perturbation » de la 4th conference sur le contrôle des fluides, 23-26 June 2008, Seattle, Washington. Cette publication se rapporte à l'étude d'écoulements tridimensionnels de fluide à l'arrière d'une plaque peu épaisse soumise à des perturbations géométriques sinusoïdales périodiques dans le sens de l'envergure. Une telle plaque présente donc un bord de fuite tronqué et de forme sinusoïdale selon l'envergure, générateur d'efforts aérodynamiques. Les résultats de cette étude montrent que par comparaison à une structure de type plaque peu épaisse à bord de fuite tronqué et plat, générateur de tourbillon de von-Karman-Bernard, les perturbations sinusoïdales modifient de façon significative la structure de sillage et influencent fortement et favorablement les tourbillons tridimensionnels de von-Karman-Bernard.

Par l'altération géométrique du culot de l'objet, on favorise la croissance des instabilités naturelles présentes dans le sillage. Les tourbillons qui sont créés dans la partie de sillage très proche du culot, sont donc naturellement poussés à se dissiper plus vite grâce aux modifications géométriques qui introduisent des perturbations aérodynamiques.

Les résultats de ce document ne concernent pas des éléments de structure d'un giravion présentant une certaine épaisseur. En outre, les problèmes de traînée induits par ces perturbations ne sont pas traités dans ce document.

Outre les documents EP0724691 et «Near-Wake Flow Dynamics from Trailing Edge Spanwise Perturbation », d'autres documents sont considérés.

Le document GB577524 décrit un aéronef à voilure tournante pourvu d'un rotor arrière anti-couple. Sur des parois latérales opposées d'une poutre de queue de l'aéronef, sont prévues des ouvertures de succion du rotor anti-couple. Les pales d'un rotor principal causent un flux orienté vers le bas, qui est forcé dans le fuselage à travers une entrée d'air sous ce rotor principal, puis est canalisée vers les ouvertures de succion sur les parois latérales opposées de la poutre de queue.

Le document EP1527992 décrit une surface aérodynamique de portance sous forme d'aile à volet arrangé pour créer un vortex. Suivant la direction longitudinale de l'aéronef, des gorges concaves sont prévues.

Le document JP2000255496, qui est considéré comme l'art antérieur le plus proche et divulgue les caractéristiques du préambule de la revendication 1, décrit sur un carénage de rotor anti-couple, des gorges horizontales et toutes parallèles dans un plan longitudinal et horizontal, ces gorges étant toutes continues transversalement d'un bord à l'autre bord du carénage.

D'autres documents comme US6345791 ou US20080217484 décrivent des surfaces aérodynamiques de portance avec respectivement des rides en surface ou des angulations de bord libre arrière.

La présente invention est définie par les revendications.

Dans une réalisation, l'invention propose un nouvel élément de structure d'aéronef du genre giravion, notamment un hélicoptère, dont la forme permet de s'affranchir des limitations mentionnées ci-dessus, et par conséquent de réduire sa traînée aérodynamique en vol d'avancement.

Dans une réalisation, l'invention propose une partie de carénage pour un rotor anti-couple, dont la forme de ladite partie de carénage, permet de réduire sa traînée aérodynamique en vol d'avancement.

Dans une réalisation, l'invention propose un Fenestron dont la forme du carénage permet de réduire sa traînée aérodynamique en vol d'avancement.

Dans une réalisation, l'invention prend la forme d'un carénage pour un élément structurel d'un aéronef, comportant une partie arrière sensiblement orthogonale à la direction longitudinale de l'aéronef, ladite partie arrière s'étendant entre deux bords de fuite espacés et présentant ainsi une largeur déterminée, ladite partie arrière obturant au moins en partie le volume interne délimité par le carénage et générant une traînée aérodynamique en vol d'avancement, caractérisé en ce que la partie arrière présente au moins au niveau des bords de fuite, une forme perturbée sur les trajets de l'écoulement d'air.

Selon un exemple de réalisation conforme à l'invention, la forme perturbée comporte des reliefs et des creux s'étendant sur toute la surface de la partie arrière localisée entre les bords de fuite.

Selon un exemple de réalisation conforme à l'invention, la forme en reliefs et en creux constitue des ondulations régulières en dimensions.

Selon un autre exemple de réalisation conforme à l'invention, la forme en reliefs et en creux constitue des ondulations irrégulières en dimensions.

Selon un exemple de réalisation conforme à l'invention, au moins une partie des ondulations s'étend d'un bord de fuite à l'autre.

Selon l'invention, au moins une partie des ondulations s'étend d'un bord de fuite à au moins une zone intermédiaire de la partie arrière, ladite au moins une zone intermédiaire étant localisée entre les deux bords de fuite.

Selon un exemple de réalisation conforme à l'invention, la forme perturbée comporte des protubérances le long de chaque bord de fuite.

Selon un autre exemple de réalisation conforme à l'invention, la forme perturbée comporte des cavités, le long de chaque bord de fuite.

Les objets assignés à l'invention sont également atteints à l'aide d'un élément de structure d'un aéronef comprenant un carénage tel que présenté ci-dessus.

Dans une réalisation, l'invention prend la forme d'un rotor arrière anti-couple caréné pour hélicoptère, comportant un moyeu sur lequel sont montées des pales, un moyen d'entraînement en rotation du moyeu et des moyens de réglage du pas des pales, ledit rotor comprenant un carénage tel que présenté ci-dessus.

Selon un exemple de réalisation conforme à l'invention, le carénage comprend deux parties latérales ouvertes, sensiblement parallèles et situées de part et d'autre du moyeu, lesdites parties latérales se terminant chacune vers l'arrière par un bord de fuite, ladite partie arrière du carénage formant un culot s'étendant entre les bords de fuite.

Selon un exemple de réalisation conforme à l'invention, la partie arrière formant le culot, présente au moins une courbure dans un plan vertical et longitudinal de l'aéronef.

Selon un exemple de réalisation conforme à l'invention, le nouvel élément de structure ou le carénage peut soit présenter une forme qui intègre dès le départ des caractéristiques techniques palliant les inconvénients mentionnés ci-dessus, soit comporter des ajouts (pièces rapportées et/ou collées) par exemple sous forme de kit.

Dans une réalisation, l'invention prend la forme d'un giravion notamment un hélicoptère, comportant un rotor arrière anti-couple caréné tel que présenté ci-dessus.

L'invention présente l'avantage selon lequel sa forme, en particulier de sa partie arrière, permet de réduire la taille du décollement de l'écoulement aérodynamique moyen, en aval de l'élément de structure ou du Fenestron. On obtient ainsi, une réduction de la traînée et par conséquent une réduction de la consommation de carburant par l'aéronef.

En outre, le surpoids engendré par la solution conforme à l'invention, est négligeable.

Un autre avantage de l'invention réside dans le fait qu'il s'agit d'une solution passive, n'introduisant aucun coût récurrent de contrôle ou de maintenance.

Un autre avantage de l'invention réside dans le fait qu'il peut être appliqué et adapté à divers types et tailles de Fenestrons.

Un autre avantage de l'invention réside dans le fait qu'il n'altère pas les qualités de vol de l'aéronef, notamment pour différents points de vol, y compris le vol latéral et une forte mise en dérapage.

L'invention et ses avantages apparaîtront avec plus de détails dans le cadre de la description qui suit avec un exemple de réalisation donné à titre illustratif en référence aux figures annexées qui représentent :
- la figure 1, un exemple de réalisation d'un élément de structure conforme à l'invention en vue de profil, ledit élément de structure faisant partie d'un rotor anti-couple du genre Fenestron,
- la figure 2, un exemple vu en perspective, d'un élément de structure faisant partie d'un rotor anti-couple du genre Fenestron, avec des formes perturbées discontinues et aussi des ondulations étendues transversalement en continu d'un bord de fuite à l'autre,
- et la figure 3, un autre exemple de réalisation d'un élément de structure conforme à l'invention selon une vue en perspective, ledit élément de structure faisant partie d'un rotor anti-couple du genre Fenestron, avec certaines formes perturbées discontinues et / ou ondulations continues d'un bord de fuite à l'autre formant un angle d'orientation radiale par rapport à une direction longitudinale de l'élément de structure et donc de l'aéronef qui n'en est équipé.

Les éléments structurellement et fonctionnellement identiques, présents sur plusieurs figures distinctes sont affectés d'une seule et même référence numérique ou alphanumérique.

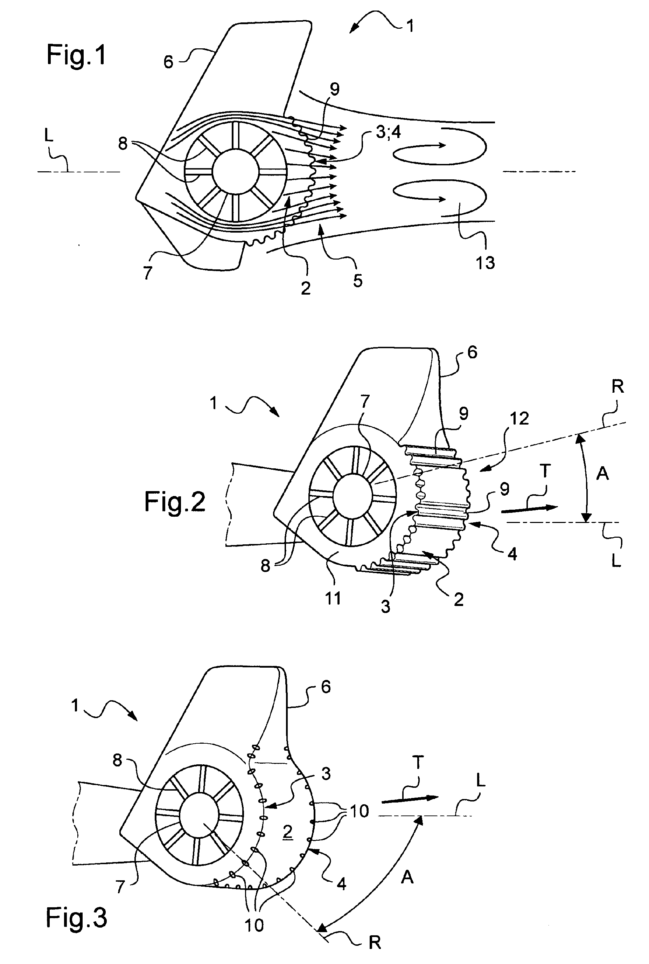

La figure 1 illustre un exemple de réalisation d'un élément de structure conforme à l'invention en vue de profil, ledit élément de structure faisant partie d'un rotor anti-couple du genre Fenestron.

La structure du Fenestron comprend un carénage 1, lequel comporte une partie arrière 2 sensiblement orthogonale à la direction longitudinale L de l'aéronef. La partie arrière 2 s'étend entre deux bords de fuite 3,4 espacés l'un de l'autre. Le carénage 1 présente ainsi une largeur déterminée, ladite partie arrière 2 obturant au moins en partie le volume interne délimité par le carénage 1 et générant une traînée aérodynamique en vol d'avancement.

La partie arrière 2 présente au moins au niveau des bords de fuite 3,4 une forme perturbée sur les trajets de l'écoulement d'air 5, matérialisés par des flèches sur la figure 1.

Le carénage 1 comporte avantageusement une dérive verticale 6 et s'étend autour d'un moyeu 7 sur lequel sont montées des pales 8 pour constituer le rotor anti-couple du genre Fenestron.

Selon un exemple de réalisation conforme à l'invention, la forme perturbée de la partie arrière 2, comporte des reliefs et des creux s'étendant sur toute la surface de la partie arrière localisée entre les bords de fuite 3 et 4.

La figure 2 illustre un exemple de réalisation d'un élément de structure conforme à l'invention selon une vue en perspective, ledit élément de structure faisant partie d'un rotor anti-couple du genre Fenestron.

Selon cet exemple de réalisation conforme à l'invention, la forme, en reliefs et en creux, constitue des ondulations 9 régulières en dimensions.

Selon un autre exemple de réalisation conforme à l'invention, la forme en reliefs et en creux constitue des ondulations 9 irrégulières en dimensions (non représentées).

Selon un exemple de réalisation conforme à l'invention, au moins une partie des ondulations 9 s'étend d'un bord de fuite 3 à l'autre bord de fuite 4.

Selon l'invention, non représenté, au moins une partie des ondulations 9 s'étend d'un bord de fuite 3 ou 4 à au moins une zone intermédiaire de la partie arrière 2, ladite au moins une zone intermédiaire étant localisée entre les deux bords de fuite 3 et 4.

La figure 3 illustre un autre exemple de réalisation d'un élément de structure conforme à l'invention selon une vue en perspective, ledit élément de structure faisant partie d'un rotor anti-couple du genre Fenestron. Dans cet exemple de réalisation, la forme perturbée comporte des protubérances 10 le long de chaque bord de fuite 3 et 4. Les protubérances 10 sont localisées au voisinage de chaque bord de fuite 3 et 4 et de préférence à cheval sur les bords de fuite 3,4 et la partie arrière 2.

Dans un tel exemple de réalisation, les ondulations peuvent donc être restreintes en longueur et rester au voisinage du bord de fuite, ce qui permet de les disposer sur les partie hautes et basses du culot.

Sur les figures 2 et 3 notamment, on remarque que selon l'invention, certaines des formes perturbées discontinues et / ou certaines ondulations continues de bord à bord ne sont pas « horizontales », mais orientées de manière distribuée ou répartie radialement.

En fait, on considère d'une part que la direction longitudinale L est horizontale. On considère d'autre part que l'envergure transversale du carénage 1 définit une direction transversale T également considérée horizontale. C'est suivant la direction transversale T qu'est étendue l'envergure du carénage 1. Conjointement, la direction longitudinale L et la direction transversale E définissent un plan d'assiette (L, T).

Par ailleurs, chaque forme perturbée discontinue et / ou chaque ondulation continue est étendue suivant un plan d'orientation propre, représenté aux figures 2 et 3 en R. Chaque plan d'orientation propre R d'une forme perturbée discontinue et / ou chaque ondulation continue est parallèle à la direction transversale T, mais forme un angle d'orientation radiale A par rapport au plan d'assiette (L, T).

Certaines formes perturbées discontinues et / ou ondulations continues forment un angle d'orientation radiale A qui est dit croissant, comme sur la figure 2. Un tel angle d'orientation radiale A croissant est tel que, de l'avant vers l'arrière du carénage 1, le plan d'orientation propre R qui est séquent au plan d'assiette (L,T) vers l'avant du carénage 1, est de plus en plus distant du plan d'assiette (L,T) vers l'arrière du carénage 1 et vers le haut du carénage 1.

D'autres formes perturbées discontinues et / ou ondulations continues forment un angle d'orientation radiale A qui est dit décroissant, comme sur comme sur la figure 3. Un tel angle d'orientation radiale A décroissant est tel que, de l'avant vers l'arrière du carénage 1, le plan d'orientation propre R qui est toujours séquent au plan d'assiette (L,T) vers l'avant du carénage 1, est de plus en plus distant du plan d'assiette (L,T) vers l'arrière du carénage 1 mais vers le bas du carénage 1.

D'après les figures, on comprend que les divers plans d'orientation propres R des formes perturbées discontinues et / ou certaines ondulations continues sont séquents et ne sont pas parallèles les uns avec les autres.

Des protubérances peuvent aussi à titre d'exemple, être prévues sur toutes les arêtes apparentes.

Selon un autre exemple de réalisation conforme à l'invention, non représenté, la forme perturbée comporte des cavités, le long de chaque bord de fuite 3,4 et de préférence à cheval sur les bords de fuite 3,4 et la partie arrière 2.

Le carénage 1 conforme à l'invention peut également être une partie constitutive d'un élément structurel d'un aéronef, ne constituant pas une surface portante.

L'invention s'applique également à un rotor arrière anti-couple caréné pour aéronef à voilure tournante, notamment pour un hélicoptère. L'élément structurel comporte un moyeu 7 sur lequel sont montées les pales 8, un moyen d'entraînement en rotation du moyeu et des moyens de réglage des pales 8. Un tel rotor comprend le carénage 1 tel que présenté ci-dessus.

Selon un exemple de réalisation conforme à l'invention, le carénage1 comprend deux parties latérales ouvertes 11 et 12, sensiblement parallèles, et situées de part et d'autre du moyeu 7 (figure 2). Les parties latérales ouvertes 11 et 12 se terminent chacune vers l'arrière par un bord de fuite respectif 3 et 4 et la partie arrière 2 du carénage 1 forme un culot franc s'étendant entre lesdits bords de fuite 3 et 4.

Selon un exemple de réalisation conforme à l'invention, la partie arrière 2 formant le culot, présente au moins une courbure dans un plan vertical et longitudinal de l'aéronef.

La forme du carénage 1 conforme à l'invention permet d'exciter les instabilités des tourbillons d'air 13 selon l'envergure de la partie arrière 2 formant le culot. Ces instabilités transverses vont accélérer la dissipation du sillage et donc réduire la taille moyenne de la zone décollée. Cette réduction de la longueur de décollement moyen a pour effet de réduire la traînée aérodynamique de forme du carénage 1.

La notion de « décollement moyen » peut être définie dans la présente invention comme la longueur moyenne de la zone de concentrations tourbillonnaires. Le décollement moyen est la forme du décollement qui apparaît lorsque l'on calcule ou l'on mesure le champ moyen en temps de l'écoulement. On peut par exemple mesurer les vitesses dans le sillage et on calcule leur valeur moyenne en chaque point de l'espace du sillage. On obtient alors une forme de sillage moyen en temps. Pour un culot, cela peut représenter en général un ou deux gros tourbillons que l'on appelle alors décollements moyens.

Naturellement, la présente invention est sujette à de nombreuses variations des modes de réalisation décrits, qui ne sortent pas du cadre de l'invention.

## Revendications

1. Carénage (1) pour un élément structurel d'un aéronef à voilure tournante ayant une direction sensiblement longitudinale (L), ce carénage (1) comportant une partie arrière (2) sensiblement orthogonale à la direction longitudinale (L), ladite partie arrière (2) s'étendant le long d'une envergure du carénage (1) entre deux bords de fuite (3,4) espacés et présentant ainsi une largeur déterminée, ladite partie arrière (2) obturant au moins en partie le volume interne délimité par le carénage (1) et générant une traînée aérodynamique en vol d'avancement ; la partie arrière (2) présente au moins au niveau des bords de fuite (3,4), au moins une forme perturbée sur les trajets de l'écoulement d'air (5),
**caractérisé en ce que** la partie arrière (2) présente au moins une forme perturbée sur les trajets de l'écoulement d'air (5) qui est discontinue transversalement le long de son envergure entre lesdits bords de fuite (3,4) espacés et que la forme perturbée discontinue s'étend d'un bord de fuite (3, 4) à au moins une zone intermédiaire de la partie arrière (2), ladite zone intermédiaire étant localisée entre les deux bords de fuite (3,4).

2. Carénage (1) selon la revendication 1,
**caractérisé en ce qu'**au moins une forme perturbée discontinue comporte des reliefs et des creux s'étendant de manière discontinue transversalement de bord à bord sur toute la surface de la partie arrière (2) localisée entre les bords de fuite (3,4).

3. Carénage (1) selon la revendication 1,
**caractérisé en ce qu'**au moins une forme perturbée discontinue présente des reliefs et creux à dimensions régulières suivant la direction longitudinale (L).

4. Carénage (1) selon la revendication 1,
**caractérisé en ce qu'**au moins une forme perturbée discontinue présente des reliefs et creux à dimensions irrégulières suivant la direction longitudinale (L).

5. Carénage (1) selon la revendication 1,
**caractérisé en ce que** le carénage (1) comporte au moins une ondulation (9) continue qui s'étend d'un bord de fuite (3) à l'autre (4), en plus d'au moins une forme perturbée discontinue transversalement le long de son envergure.

6. Carénage (1) selon la revendication 1,
**caractérisé en ce qu'**au moins une forme perturbée discontinue comporte des protubérances (10) le long de chaque bord de fuite (3,4).

7. Carénage (1) selon la revendication 1,
**caractérisé en ce qu'**au moins une forme perturbée discontinue comporte des cavités le long de chaque bord de fuite (3,4).

8. Carénage (1) selon la revendication 1,
**caractérisé en ce qu'**au moins une forme perturbée discontinue et / ou ondulation continue forme un angle d'orientation radiale (A) croissant, ledit angle d'orientation radiale (A) croissant étant tel que, de l'avant vers l'arrière du carénage (1), un plan d'orientation propre (R) qui est séquent à un plan d'assiette (L,T) longitudinal et transversal vers l'avant du carénage (1), est de plus en plus distant dudit plan d'assiette (L,T) vers l'arrière et vers le haut du carénage (1).

9. Carénage (1) selon la revendication 1,
**caractérisé en ce qu'**au moins une forme perturbée discontinue et / ou ondulation continue forme un angle d'orientation radiale (A) décroissant, ledit angle d'orientation radiale (A) décroissant étant tel que, de l'avant vers l'arrière du carénage (1), un plan d'orientation propre (R) qui est séquent à un plan d'assiette (L,T) longitudinal et transversal vers l'avant du carénage (1), est de plus en plus distant dudit plan d'assiette (L,T) vers l'arrière et vers le bas du carénage (1).

10. Elément de structure pour hélicoptère, comportant un moyeu (7) sur lequel sont montées des pales (8), un moyen d'entraînement en rotation du moyeu (7) et des moyens de réglage des pales (8),
**caractérisé en ce qu'**il comprend un carénage (1) conforme à l'une des revendications 1 à 9.

11. Elément de structure selon la revendication 10,
**caractérisé en ce que** le carénage (1) comprend deux parties latérales ouvertes, sensiblement parallèles et situées de part et d'autre du moyeu (7), lesdites parties latérales se terminant chacune vers l'arrière par un bord de fuite (3,4), ladite partie arrière (2) du carénage (1) formant un culot s'étendant entre les bords de fuite (3,4).

12. Elément de structure selon la revendication 10,
**caractérisé en ce que** la partie arrière (2) formant le culot, présente au moins une courbure dans un plan vertical et longitudinal de cet élément de structure

13. Aéronef à voilure tournante comportant un élément de structure à rotor arrière anti-couple caréné selon l'une des revendications 10 à 12.

## Patentansprüche

1. Verkleidung (1) für ein Strukturelement eines Drehflügelflugzeugs mit einer im Wesentlichen längs (L) verlaufenden Ausrichtung, wobei die Verkleidung (1) einen hinteren Teil (2) aufweist, der im Wesentlichen senkrecht zu der Längsrichtung (L) ausgerichtet ist, wobei der hintere Teil (2) sich über eine Breite der Verkleidung (1) zwischen zwei beabstandeten Hinterkanten (3, 4) erstreckt und somit eine bestimmte Breite aufweist, wobei der hintere Teil (2) mindestens teilweise das von der Verkleidung (1) eingeschlossene Innenvolumen verschließt und beim Vortriebsflug einen Strömungswiderstand erzeugt, wobei der hintere Teil (2) mindestens auf der Höhe der Hinterkanten (3, 4) mindestens eine gestörte Form in den Luftströmungsverläufen (5) aufweist,
**dadurch gekennzeichnet, dass** der hintere Teil (2) mindestens eine gestörte Form in den Luftströmungsverläufen (5) aufweist, die in Querrichtung entlang seiner Breite zwischen den beabstandeten Hinterkanten (3, 4) unterbrochen ist, und dadurch, dass die unterbrochene gestörte Form sich von einer Hinterkante (3, 4) in mindestens einen Zwischenbereich des hinteren Teils (2) erstreckt, wobei der Zwischenbereich zwischen den beiden Hinterkanten (3, 4) liegt.

2. Verkleidung (1) nach Anspruch 1,
**dadurch gekennzeichnet, dass** mindestens eine unterbrochene gestörte Form Erhöhungen und Vertiefungen aufweist, die sich unterbrochen quer von einer Kante zur anderen über die gesamte Fläche des hinteren Teils (2) erstrecken, die zwischen den Hinterkanten (3, 4) liegt.

3. Verkleidung (1) nach Anspruch 1,
**dadurch gekennzeichnet, dass** mindestens eine unterbrochene gestörte Form Erhöhungen und Vertiefungen mit gleichmäßigen Abmessungen entlang der Längsrichtung (L) aufweist.

4. Verkleidung (1) nach Anspruch 1,
**dadurch gekennzeichnet, dass** mindestens eine unterbrochene gestörte Form Erhöhungen und Vertiefungen mit ungleichmäßigen Abmessungen entlang der Längsrichtung (L) aufweist.

5. Verkleidung (1) nach Anspruch 1,
**dadurch gekennzeichnet, dass** die Verkleidung (1) mindestens eine kontinuierliche Welligkeit (9) aufweist, die sich von einer Hinterkante (3) bis zur anderen Hinterkante (4) erstreckt, zusätzlich zu mindestens einer quer entlang ihrer Breite unterbrochenen gestörten Form.

6. Verkleidung (1) nach Anspruch 1,
**dadurch gekennzeichnet, dass** mindestens eine unterbrochene gestörte Form Höcker (10) entlang jeder Hinterkante (3, 4) aufweist.

7. Verkleidung (1) nach Anspruch 1,
**dadurch gekennzeichnet, dass** mindestens eine unterbrochene gestörte Form Vertiefungen eritlang jeder Hinterkante (3, 4) aufweist.

8. Verkleidung (1) nach Anspruch 1,
**dadurch gekennzeichnet, dass** mindestens eine unterbrochene gestörte Form und/oder kontinuierliche Welligkeit einen steigenden radialen Ausrichtungswinkel (A) aufweist, wobei der steigende radiale Ausrichtungswinkel (A) so ausgeführt ist, dass von der Vorderseite zur Hinterseite der Verkleidung (1) eine Ausrichtungsebene (R), die eine längs und quer zum Vorderteil der Verkleidung (1) verlaufende Aufstandsebene (L, T) schneidet, in Richtung zum hinteren Teil und zum oberen Teil der Verkleidung (1) hin von der Aufstandsebene (L, T) mehr und mehr beabstandet ist.

9. Verkleidung (1) nach Anspruch 1,
**dadurch gekennzeichnet, dass** mindestens eine unterbrochene gestörte Form und/oder kontinuierliche Welligkeit einen abfallenden radialen Ausrichtungswinkel (A) aufweist, wobei der abfallende radiale Ausrichtungswinkel (A) so ausgeführt ist, dass von der Vorderseite der Verkleidung (1) zur Hinterseite eine Ausrichtungsebene (R), die eine längs und quer zum vorderen Teil der Verkleidung (1) verlaufende Aufstandsebene (L, T) schneidet, in Richtung zum hinteren Teil und zum unteren Teil der Verkleidung (1) hin von der Aufstandsebene (L, T) mehr und mehr beabstandet ist.

10. Strukturelement eines Hubschraubers mit einer Nabe (7), auf der Rotorblätter (8) montiert sind, einem Drehantriebsmittel der Nabe (7) und mit Einstellmitteln der Rotorblätter (8),
**dadurch gekennzeichnet, dass** es eine Verkleidung (1) aufweist gemäß einem der Ansprüche 1 bis 9.

11. Strukturelement nach Anspruch 10,
**dadurch gekennzeichnet, dass** die Verkleidung (1) zwei seitlich offene, im Wesentlichen parallele und zu beiden Seiten der Nabe (7) gelegene Teile aufweist, wobei die Seitenteile jeweils nach hinten mit einer Hinterkante (3, 4) enden, wobei der hintere Teil (2) der Verkleidung (1) ein Gehäuse bildet, das sich zwischen den Hinterkanten (3, 4) erstreckt.

12. Strukturelement nach Anspruch 10,
**dadurch gekennzeichnet, dass** der hintere Teil (2), der das Gehäuse bildet, mindestens eine Krümmung in einer Vertikal- und Longitudinalebene dieses Strukturelements aufweist.

13. Drehflügelluftfahrzeug mit einem Strukturelement mit einem hinteren Gegendrehmomentrotor, der nach einem der Ansprüche 10 bis 12 verkleidet ist.

## Claims

1. Fairing (1) for a structural element of a rotary wing aircraft having a substantially longitudinal direction (L), said fairing (1) comprising a rear portion (2) substantially orthogonal to the longitudinal direction (L), said rear portion (2) extending along a span of the fairing (1) between two spaced-apart trailing edges (3,4) and thus having a determined width, said rear portion (2) closing at least partly the internal volume defined by the fairing (1) and generating an aerodynamic drag in forward flight; the rear portion (2) having, at least at the trailing edges (3,4), at least one perturbed shape on the paths of the airflow (5), **characterised in that** the rear portion (2) has at least one perturbed shape on the paths of the airflow (5) which is transversely discontinuous along its span between said spaced-apart trailing edges (3,4) and that the discontinuous perturbed shape extends from one trailing edge (3, 4) to at least an intermediate zone of the rear portion (2), said intermediate zone being located between the two trailing edges (3,4).

2. Fairing (1) according to claim 1,
**characterised in that** at least one discontinuous perturbed shape comprises reliefs and hollows extending transversely discontinuously from edge to edge over the entire surface of the rear portion (2) located between the trailing edges (3,4).

3. Fairing (1) according to claim 1,
**characterised in that** at least one discontinuous perturbed shape has reliefs and hollows of regular dimensions in the longitudinal direction (L).

4. Fairing (1) according to claim 1,
**characterised in that** at least one discontinuous perturbed shape has reliefs and hollows of irregular dimensions in the longitudinal direction (L).

5. Fairing (1) according to claim 1,
**characterised in that** the fairing (1) comprises at least one continuous undulation (9) which extends from one trailing edge (3) to the other (4), in addition to at least one transversely discontinuous perturbed shape along its span.

6. Fairing (1) according to claim 1,
**characterised in that** at least one discontinuous perturbed shape comprises protrusions (10) along each trailing edge (3,4).

7. Fairing (1) according to claim 1,
**characterised in that** at least one discontinuous perturbed shape comprises cavities along each trailing edge (3,4).

8. Fairing (1) according to claim 1,
**characterised in that** at least one discontinuous perturbed shape and/or continuous undulation forms an increasing radially oriented angle (A), said increasing radially oriented angle (A) being such that, from the front towards the rear of the fairing (1), an orientation eigenplane (R) sequent to a longitudinal and transverse attitude plane (L, T) towards the front of the fairing (1) is more and more distant from said attitude plane (L, T) towards the rear and towards the top of the fairing (1).

9. Fairing (1) according to claim 1,
**characterised in that** at least one discontinuous perturbed shape and/or continuous undulation forms a decreasing radially oriented angle (A), said decreasing radially oriented angle (A) being such that, from the front towards the rear of the fairing (1), an orientation eigenplane (R) sequent to a longitudinal and transverse attitude plane (L, T) towards the front of the fairing (1) is more and more distant from said attitude plane (L, T) towards the rear and towards the bottom of the fairing (1).

10. Structural element for a helicopter, comprising a hub (7) on which are mounted blades (8), a means for driving the hub (7) in rotation and means for adjusting the blades (8),
**characterised in that** it comprises a fairing (1) according to one of claims 1 to 9.

11. Structural element according to claim 10,
**characterised in that** the fairing (1) comprises two open lateral portions substantially parallel and situated on one side and the other of the hub (7), each of said lateral portions terminating towards the rear by a trailing edge (3,4), said rear portion (2) of the fairing (1) forming a base extending between the trailing edges (3,4).

12. Structural element according to claim 10,
**characterised in that** the rear portion (2) forming the base has at least a curvature in a vertical and longitudinal plane of said structural element.

13. Rotary wing aircraft comprising a structural element with an anti-torque tail rotor faired according to one of claims 10 to 12.
